(19) Europäisches Patentamt

European Patent Office

Office européen des brevets

(11) EP 0 650 866 B1

(12) **EUROPÄISCHE PATENTSCHRIFT**

(45) Veröffentlichungstag und Bekanntmachung des Hinweises auf die Patenterteilung:
**28.05.1997 Patentblatt 1997/22**

(51) Int. Cl.$^6$: **B60Q 1/48**

(21) Anmeldenummer: **94112713.6**

(22) Anmeldetag: **16.08.1994**

(54) **Verfahren und Vorrichtung zum Ausparken eines Fahrzeuges**

System and device for vehicle to get out of a parking place

Procédé et dispositif pour sortir d'une place de parking pour véhicule

(84) Benannte Vertragsstaaten:
**DE FR GB**

(30) Priorität: **29.09.1993 DE 4333112**

(43) Veröffentlichungstag der Anmeldung:
**03.05.1995 Patentblatt 1995/18**

(73) Patentinhaber: **ROBERT BOSCH GMBH**
**70442 Stuttgart (DE)**

(72) Erfinder: **Hoetzel, Jürgen, Dipl.-Ing.**
**D-64720 Michelstadt (DE)**

(56) Entgegenhaltungen:
**DE-A- 3 813 083          DE-A- 4 233 624**
**GB-A- 2 131 642          GB-A- 2 215 158**

Printed by Rank Xerox (UK) Business Services
2.14.5/3.4

## Beschreibung

### Stand der Technik

Die Erfindung geht aus von einem Verfahren zum Ausparken eines Fahrzeuges aus einer Parklücke bzw. von einer Vorrichtung zur Durchführung des Verfahrens nach der Gattung der nebengeordneten Ansprüche. Es ist schon bekannt, zum Einparken in eine Parklücke zunächst beim Vorbeifahren die Länge der Parklücke auszumessen, so daß in Abhängigkeit von der Fahrzeugposition und der Länge der Parklücke mit möglichst wenigen Lenkbewegungen das Fahrzeug so eingeparkt werden kann, daß möglichst kein Parkraum ungenutzt bleibt oder möglichst viele Fahrzeuge parken können. Ein derartiges Verfahren bzw. Vorrichtung ist aus der DE-AS 29 01 504 bekannt. Ein derartiges Einparkverfahren ist aber für das Ausparken eines Fahrzeuges nicht verwendbar, da beim Beginn des Ausparkens die Länge der Parklücke, d.h. der verfügbar Ausparkweg vor und hinter dem Fahrzeug nicht bekannt ist. Selbst eine Speicherung der beim Einparken ausgemessenen Parklücke löst nicht dieses Problem, da während der Parkzeit sich die Parklücke verändert haben kann. Da beim Beginn des Ausparkens weder der Abstand zu benachbarten Fahrzeugen, Hindernissen oder deren Breite bekannt ist, ist kein optimaler Lenkwinkel bestimmbar. Die beim Einparken verwendete Strategie, daß das Fahrzeug möglichst dicht am Bordstein geparkt wird, wobei möglichst wenig Parkplatz benötigt wird, ist beim Ausparkvorgang nicht verwendbar.

Eine andere Parkhilfe ist aus der DE-A-3 244 358 bekannt.

### Vorteile der Erfindung

Das erfindungsgemäße Verfahren bzw. die Vorrichtung mit den Merkmalen der nebengeordneten unabhängigen Ansprüche haben demgegenüber den Vorteil, daß auch bei unbekannten Parkraumgrenzen ein zunächst unvollständiges Modell der Hindernisbeschreibung erstellt, auf dem eine Ausparkstrategie aufgebaut werden kann.

Durch die in den abhängigen Ansprüchen aufgeführten Maßnahmen sind vorteilhafte Weiterbildungen und Verbesserungen des in den unabhängigen Ansprüchen angegebenen Verfahrens bzw. der Vorrichtung möglich. Besonders vorteilhaft ist, daß während des Ausparkens das Umgebungsmodell durch Datensignale der Sensoren aktualisiert/vervollständigt wird, so daß die Fahrstrategie kontinuierlich bis zum Abschluß des Ausparkmanövers angepaßt werden kann. Dies wird vorteilhaft dadurch erreicht, daS in der entstehenden lokalen Umgebungskarte aus den Verbindungen der Sengmenträder der Hindernisse ein Polygon für das Umgebungsmodell erzeugt wird.

Weiter ist vorteilhaft, daß bei teilweiser oder unvollständiger Hindernisbeschreibung im Modell der Ausparkvorgang gestartet wird. Dadurch treten keine unnützen Zeitverzögerungen auf, die durch das Vervollständigen des Umgebungsmodell erforderlich sind. Weiterhin ist günstig, daß das Umgebungsmodell kontinuierlich aktualisiert wird, da mit der Fahrbewegung des Fahrzeuges der Abstand zu den Hindernissen kontinuierlich verändert wird.

Vorteilhaft ist auch, daß eine optische oder akustische Anzeige vorgesehen ist, so daß der Fahrer die Hinweise für die durchzuführenden Lenkbewegungen leicht erfassen kann.

Um eine Kollision oder ein zu nahes Auffahren zu verhindern, ist die Ausgabe eines Warnsignales vorteilhaft, wenn ein bestimmter vorgegebener Mindestabstand unterschritten wird.

### Zeichnung

Ein Ausführungsbeispiel der Erfindung ist in der Zeichnung dargestellt und in der Figur näher erläutert. Figur 1 zeigt ein Blockschaltbild der Vorrichtung zur Durchführung des Verfahrens, Figur 2 zeigt ein Blockschaltbild eines Bestimmungsmoduls, Figur 2a zeigt ein Diagramm, Figur 3 zeigt ein Blockschaltbild des Sensormoduls, und Figur 4 zeigt eine Umgebungskarte.

### Beschreibung des Ausführungsbeispiels

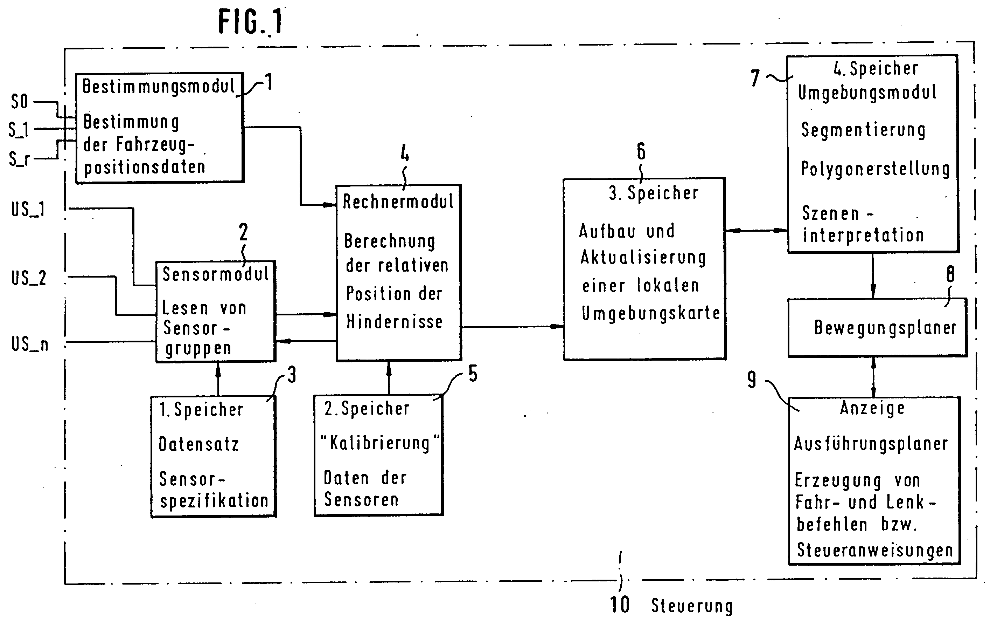

Figur 1 zeigt eine Steuerung 10, bei der mehrere Funktionsbausteine in der Form eines Blockschaltbildes dargestellt sind. Ein Bestimmungsmodul 1 zur Bestimmung der Fahrzeugposition ist mit einem oder mehreren Sensoren Sl, Sr, S$\theta$ verbunden. Diese Sensoren sind beispielsweise am linken oder rechten Rad angeordnet und messen die Fahrzeugbewegung sowie den Lenkwinkel $\theta$. Die von ihnen abgegebenen Signale werden im Bestimmungsmodul 1 als Wegstrecke oder Fahrwinkel $\theta$ des Fahrzeuges ausgewertet, so daß die momentane Fahrzeugposition feststellbar ist. Minimal werden zur Bestimmung der momentanen Fahrzeugposition zwei voneinander unabhängige Sensoren (z. B. 1 Rad und Lenkwinkel) benötigt. Des weiteren ist ein Sensormodul 2 vorgesehen, an dessen Eingänge einer oder mehrere Ultraschallsensoren US1, US2, USn anschließbar sind. Die Ultraschallsensoren sind im vorderen, seitlichen und/oder hinteren Bereich des Fahrzeuges angeordnet und erfassen die Hindernisse vorzugsweise rund um das Fahrzeug. Außer Ultraschallsensoren sind selbstverständlich alle Sensoren, die eine kontaktlose Entfernungsmessung ermöglichen, einsetzbar.

Ausgangsseitig ist das Sensormodul 2 ebenso wie das Bestimmungsmodul 1 mit einem Rechnermodul 4 verbunden, das aus den ankommenden Daten die relative Position der Hindernisse zum Fahrzeug berechnet. Das Sensormodul 2 ist mit einem ersten Speicher 2 verbunden, in dem Datensätze für die Sensorspezifikation gespeichert sind. In einem zweiten Speicher 5 sind Kalibrierungsdaten aller Sensoren gespeichert, die zur Kalibrierung der Meßwerte vom Rechnermodul 4 verwendet werden. Aus den Meßdaten berechnet das Rechnermodul 4 zunächst eine aktuelle lokale Umgebungskarte, die in einem dritten Speicher 6 abgelegt wird. Anschließend berechnet das Rechnermodul 4 aus der lokalen Umgebungskarte ein Umgebungsmodell, das in einem vierten Speicher 7 zwischengespeichert wird. Aus dem Umgebungsmodell wird anschließend in einem Bewegungsplan 8 eine Fahrstrategie des Fahrzeuges festgelegt und entsprechende Fahrsignale in einem Ausführungsplaner 9 optisch oder akustisch angezeigt.

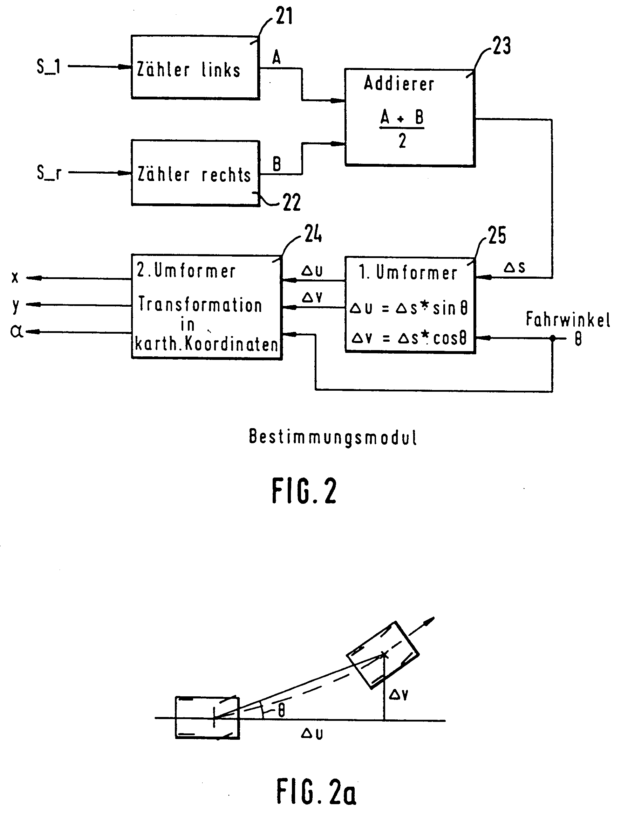

Figur 2 zeigt ein Blockschaltbild einer Ausführungsvariante des Bestimmungsmoduls 1. Den beiden Wegsensoren $S_l$ und $S_r$ für das linke bzw. rechte Hinterrad des Fahrzeuges sind Zähler 21 und 22 zugeordnet. Die Zähler 21, 22 zählen Wegimpulse, die der zurückgelegten Wegstrecke des Fahrzeuges entsprechen. Entsprechende Kalibrierungen für Reifendurchmesser und Impulszahl pro Wegstrecke sind in dem zweiten Speicher 5 abgelegt, so daß die gezählten Impulse direkt proportionale zur zurückgelegten Wegstrecke des Fahrzeuges sind. Die Ausgänge der Zähler A bzw. B werden auf eine Addierer 23 geführt, der den Mittelwert $\frac{A+B}{2}$ bildet.

Als Addierer 23 kann eine marktgängige integrierte Schaltung, z. B. 74 LS 382 verwendet werden. Vorzugsweise wird die Rechnung jedoch im Rechnermodul 4 durchgeführt und der Mittelwert $\Delta S$ zwischengespeichert. Der ermittelte Mittelwert $\Delta S$ stellt also die relative Änderung des Fahrzeuges zur vorherigen Position dar. Mit einem Winkelsensor $S\theta$ wird weiter der Lenkwinkel $\theta$ des Fahrzeugs direkt oder indirekt gemessen und dieser ebenfalls einem ersten Umformer 25 zugeführt. Als Winkelsensor $S\theta$ eignet sich ein Sensor, der beispielsweise den Lenkwinkel am Rad oder dem Lenkgetriebe mißt. Aus dem Lenkwinkel $\theta$ und dem Mittelwert $\Delta S$ berechnet der erste Umformer 25 nach den Gleichungen $\Delta u = \Delta s \times \Delta \sin\theta$ und $\Delta v = \Delta s \times \cos\theta$ die Achsenabschnitte $\Delta u$ und $\Delta v$ für die neue Position des Fahrzeuges (Figur 2a). Der erste Umformer 25 wird vorzugsweise ebenfalls durch eine entsprechende Rechenroutine nach den angegebenen Formeln vom Rechnermodul 4 realisiert.

Die so gewonnen Daten $\Delta u$, $\Delta v$ sowie auch der Lenkwinkel $\theta$ werden in einem zweiten Umformer 24 in die Koordinaten x, y eines kathesischen Koordinatensystems umgewandelt. Der zweite Umformer 24 wird vorteilhaft ebenfalls vom Rechnermodul 4 realisiert. Mit den Werten x, y, $\theta$ wird dann die aktuelle Position des Fahrzeuges in der lokalen Umgebungskarte 6 eingetragen, die im dritten Speicher 6 zwischengespeichert ist. Figur 2a zeigt ein Diagramm für die Zuordnung der ermittelten Werte $\Delta u$, $\Delta v$ und $\theta$ bezüglich der zurückgelegten Strecke des Fahrzeuges.

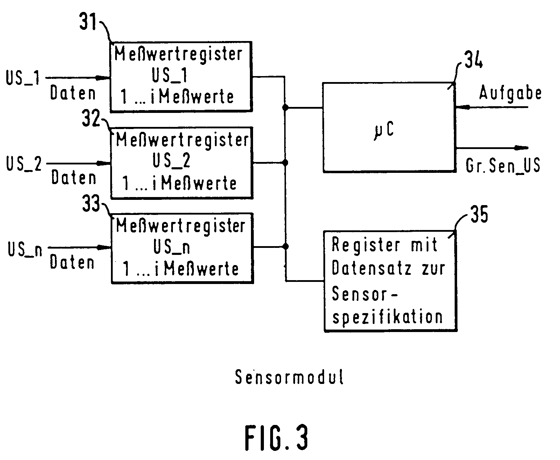

Figur 3 zeigt den schematischen Aufbau des Sensormoduls 2 an, den die Ultraschallsensoren $US_1$, $US_2$ und $US_n$ über Meßwertregister 31, 32, 33 angeschlossen sind. In den Meßwertregistern 31, 32, 33 werden laufend die Meßwerte der Sensoren eingelesen und zwischengespeichert. Ein Mikrocomputer 34, der mit den Ausgängen der Meßwertregister 31, 32, 33 verbunden ist, wählt mittels einer nicht dargestellten Schaltmatrix die Meßwerte der einzelnen Meßwertregister 31, 32, 33 an und berechnet daraus den Abstand zu einem oder mehreren Hindernissen im Empfangsbereich der Sensoren. In weiterer Ausgestaltung der Erfindung ist vorgesehen, mittels Mehrfachmessung und Plausibilitätsprüfung, beispielsweise mit der aud der DE 40 23 538 A1 bekannten Kreuzmessung die Meßwerte zu den Hindernissen zu überprüfen. Der Mikrocomputer 34 ist Bestandteil des Rechnermoduls 4 und ist für die vorgesehenen Rechenoperationen insbesondere auch zur Bildung der lokalen Umgebungskarte mit der Eintragung der Hindernisse verwendbar. Das erfolgt dadurch, daS die gemäß dem zweiten Umformer 24 transformierten kathesischen Koordinaten x, y sowie O verwendet werden, um einerseits die Position des Fahrzeugs in der lokalen Umgebungskarte einzutragen und andererseits um die Hindernisse in Relation zum Fahrzeug auf der Umgebungskarte zu markieren und im dritten Speicher zu speichern. So entsteht zu jedem Zeitpunkt eine aktuelle lokale Umgebungskarte, aus der der Fahrbereich des Fahrzeuges für den Ausparkvorgang verwendbar ist.

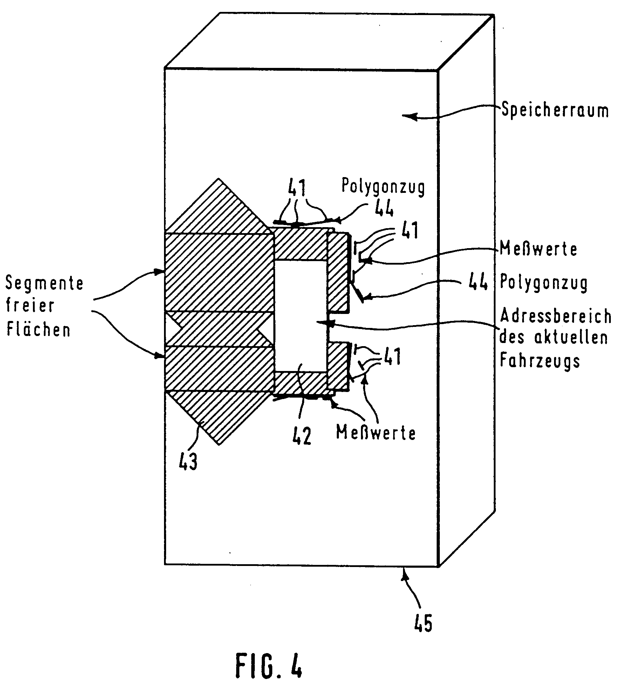

Figur 4 zeigt eine aktuelle lokale Umgebungskarte des dritten Speichers 6, in der schematische Hindernisse 41 um ein Fahrzeug 42 angeordnet sind. Diese Karte ist nur schematisch dargestellt, da in dem dritten Speicher 6 natürlich nur die Adressen für die Hindernisse gespeichert sind. Das Fahrzeug 42 ist an drei Seiten mit Hindernissen 41 umgeben, während die vierte Seite eine freie Fläche 43 zeigt, in die das Fahrzeug beim Ausparken hineinmanövriert wird. Da die Hindernisse in der Praxis einen gewissen Abstand zueinander haben, dieser aber so klein ist, daß das Fahrzeug nicht durchfahren kann und darf, bildet das Rechnermodul 4 aus der lokalen Umgebungskarte ein Umgebungsmodell, das in einem vierten Speicher jeweils für einen aktuellen Zeitpunkt zwischengespeichert ist. Das Umgebungsmodell wird dadurch gewonnen, daß die Hindernisse 41 (Figur 4) mit einem Polygonzug 44 verbunden werden, die praktisch als Barriere für das Fahrzeug interpretiert werden. Der Polygonzug 44 zwischen den Hindernissen 41 wird dabei so gebildet, daß er bei einem vorgegebenen Mindestabstand der Hindernisse 41 zueinander unterbrochen wird. Diese Unterbrechung kann dann als mögliche Ausfahrt interpretiert und genutzt werden.

Das Ausparkverfahren hat den Vorteil, daß die Parklücke eine unbekannte Größe oder Geometrie aufweisen kann. Zu Beginn des Ausparkvorganges messen die Sensoren sowohl die Abstände zu den Hindernissen als auch den Lenkwinkel und ermitteln daraus eine mögliche Fahrtkurve, die der Fahrzeugführer mit dem Fahrzeug alsdann durchführt. Die Fahrkurve wird vorzugsweise als Fahrstrategie so gewählt, daß das Fahrzeug mit möglichst wenigen Lenkund/oder Rangierbewegungen ausparken kann. Diese reale Fahrkurve wird in die zugeordnete Umgebungskarte eingeschrieben, so daß sich aus den gespeicherten Daten ergibt, ob das Fahrzeug sich auf Kollisionskurs befindet. Die gemessenen Werte für die Abstandsmessung und den Fahrwinkel werden mit den entsprechenden Korrekturwerten in das Rechnermodul eingelesen und auf Plausibilität geprüft. Die Korrekturwerte wurden zuvor durch eine Meßfahrt oder durch Eichung tabellarisch in dem ersten oder zweiten Speicher 3, 5 gespeichert. Ist mittels der Polygonzugerstellung das Umgebungsmodell berechnet, dann kann das Rechnermodul 4 anhand der vorliegenden Daten eine Fahrstrategie berechnen, die ein endgültiges kollisionsfreies Ausparken ermöglicht. Dieser Vorgang wird in einem Bewegungsplan 8 von dem Rechnermodul 4 durchgeführt. Durch die kontinuierliche Lieferung von Sensordaten während des Ausparkvorganges wird jedoch ständig die Fahrstrategie und somit die Fahrkurve auf Aktualität geprüft und gegebenenfalls angepaßt. Aufgrund der Fahrstrategie des Bewegungsplaners 8 können dem Fahrer Fahrtrichtungspfeile vorgegeben werden, nach denen er sich richten kann. Beispielsweise zeigt ein Pfeil in Richtung links an, daß der Fahrer weiter nach links lenken muß. Entsprechend zeigt ein Pfeil nach rechts an, daß er weiter nach rechts lenken muß. Ein Pfeil geradeaus zeigt, daß er geradeaus fahren kann, und ein Stoppzeichen zeigt an, daß er seine Fahrt abstoppen muß, um eine Kollision zu verhindern. Statt einer optischen Anzeige kann auch eine akustische Anzeige vorgesehen sein, die eine entsprechende Signal- oder Sprachausgabe macht. Es ist vorgesehen, die Fahrstrategie so aufzubauen, daß das Fahrzeug beim Ausparkvorgang einen vorgegebenen Sicherheitsmindestabstand einhalten muß. Dieser kann fest programmiert oder je nach der Fahrpraxis eines Fahrers wählbar sein.

**Patentansprüche**

1. Verfahren zum Ausparken eines Fahrzeuges aus einer Parklücke, wobei mittels von am Fahrzeug angebrachten Sensoren der Abstand zum Hindernis in Fahrtrichtung gemessen wird, und mit einer Steuerung, die aus den gemessenen Abständen eine Fahrstrategie für das Fahrzeug ermittelt, dadurch gekennzeichnet, daß die Steuerung (10) mit Hilfe der Meßwerte eine lokale Umgebungskarte (45) im Bereich des Fahr zeugs (42) bildet, in der Raumdaten und Daten der Hindernisse (41) eingetragen sind und daß die Steuerung (10) mit Hilfe der Umgebungskarte ein Umgebungsmodell bestimmt, mit dem die Fahrstrategie für den Ausparkvorgang festgelegt wird.

2. Verfahren nach Anspruch 1, dadurch gekennzeichnet, daß während des Ausparkvorgangs das Umgebungsmodell durch von Sensoren abgegebene Datensignale aktualisiert wird, wobei die Sensordaten mit den Fahrzeugdaten derart verknüpft werden, daß aus den Verbindungen der Segmentränder der erfaßten Hindernisse ein Polygonzug (44) für das Umgebungsmodell erzeugt wird.

3. Verfahren nach Anspruch 2, dadurch gekennzeichnet, daß die Fahr Strategie vom Beginn bis zum Abschluß des Ausparkvorgangs an das aktuelle Umgebungsmodell angepaßt wird.

4. Verfahren nach einem der vorhergehenden Ansprüche, dadurch gekennzeichnet, daß der Ausparkvorgang bei unvollständiger Hindernisbeschreibung im Modell gestartet wird.

5. Vorrichtung zur Durchführung des Verfahrens nach einem der vor hergehenden Ansprüche, dadurch gekennzeichnet, daß die Vorrichtung eine Steuerung (10) aufweist, die Steuerung (10) wenigstens mit ei nem Sensor ($S_l$, $S_r$, O ,$US_1$, $US_2$, $US_n$) zur Erfassung eines Hindernisses relativ zur Fahrzeugposition verbunden ist, daß die Steuerung Mittel (4, 6) zur Bildung der lokalen Umgebungskarte und des Umgebungsmodells aufweist und daß eine Anzeige (9) vorgesehen ist, die ausgebildet ist, optische oder akustische Steueranweisungen an den Fahrer des Fahrzeuges abzugeben, die aus dem Umgebungsmodell abgeleitet sind.

6. Vorrichtung nach Anspruch 5, dadurch gekennzeichnet, daß bei Unterschreiten eines vorgegebenen Mindestabstandes ein optisches oder akustisches Warnsignal ausgebbar ist.

**Claims**

1. Method for driving a vehicle out of a parking space, the distance to the obstacle in the direction of travel being measured by means of sensors fitted to the vehicle, and having a controller which determines a driving strategy for the vehicle from the measured distances, characterized in that the controller (10), with the aid of the measured values, forms a local environment map (45) in the area of the vehicle (42), in which map spatial data and data about the obstacles (41) are plotted, and in that the controller (10), with the aid of the environment map, determines a model of the environment with which the driving strategy for the driving-out procedure is defined.

2. Method according to Claim 1, characterized in that, during the driving-out procedure, the model of the environment is updated by means of data signals emitted by sensors, the sensor data being logically linked with the vehicle data in such a way that an open polygon (44) for the model of the environment is generated from the combination of the segment boundaries of the detected obstacles.

3. Method according to Claim 2, characterized in that the driving strategy is adapted to the up-to-date model of the environment from the beginning until the completion of the driving-out procedure.

4. Method according to one of the preceding claims, characterized in that the driving-out procedure is started with an incomplete description of the obstacles in the model.

5. Device for carrying out the method according to one of the preceding claims, characterized in that the device has a controller (10), the controller (10) is connected at least to one sensor ($S_l$, $S_r$, O, $US_1$, $US_2$, $US_n$) for detecting an obstacle in relation to the vehicle position, in that the controller has means (4, 6) for forming the local environment map and the model of the environment, and in that an indicator (9) is provided which is designed to emit visual or acoustic control instructions to the driver of the vehicle, these instructions being derived from the model of this environment.

6. Device according to Claim 5, characterized in that if the distance falls below a prescribed minimum, a visual or acoustic warning signal may be emitted.

**Revendications**

1. Procédé pour faire sortir un véhicule de stationnement d'un emplacement de stationnement, en mesurant la distance par rapport à des obstacles dans la direction de la marche du véhicule au moyen de détecteurs mis sur le véhicule, et avec une commande, qui détermine à partir des distances mesurées une stratégie de conduite pour le véhicule,
caractérisé en ce que
la commande (10) forme à l'aide des valeurs mesurées une carte locale de l'environnement (45) dans la zone du véhicule (42), dans laquelle sont enregistrés des données spatiales et les données des obstacles (41) et
en ce que
la commande (10) détermine à l'aide de la carte de l'environnement un modèle d'environnement, avec lequel on fixe la stratégie de conduite pour le processus de sortie de stationnement

2. Procédé selon la revendication 1,
caractérisé en ce que
pendant le processus de sortie de stationnement on actualise le modèle de l'environnement par des signaux de données délivrés par les détecteurs, les données de détection étant combinées avec les données du véhicule d'une manière telle que l'on produise à partir des liaisons des bords des segments des obstacles détectés une ligne polygonale (44) pour le modèle d'environnement.

3. Procédé selon la revendication 2,
caractérisé en ce que
la stratégie de conduite est adaptée du début jusqu'à la fin du processus de sortie de stationnement au modèle actuel de l'environnement.

4. Procédé selon l'une des revendications précédentes,
caractérisé en ce que le processus de sortie de stationnement est démarré alors que la description des obstacles dans le modèle est incomplète.

5. Dispositif pour la mise en oeuvre du procédé selon l'une des revendications précédentes,
caractérisé en ce que
le dispositif présente une commande (10), qui est reliée au moins à un détecteur ($S_1$, $S_r$, 0, $US_1$, $US_2$, $Us_n$) pour détecter un obstacle par rapport à la position du véhicule,
en ce que
la commande présente des moyens (4, 6) pour créer la carte locale de l'environnement et du modèle d'environnement et
en ce qu'
il est prévu une indication (9), qui est constituée de façon à délivrer des indications optiques ou acoustiques au conducteur du véhicule, qui proviennent du modèle d'environnement.

6. Dispositif selon la revendication 5,
caractérisé en ce que
lors du sous-dépassement d'une distance minimale prédéfinie on peut délivrer un signal d'avertissement optique ou acoustique.

# FIG.1

EP 0 650 866 B1

**Bestimmungsmodul** 1

Bestimmung der Fahrzeug-positionsdaten

S0, S_1, S_r

US_1, US_2, US_n

**Sensormodul** 2

Lesen von Sensor-gruppen

**1. Speicher** 3

Datensatz

Sensor-spezifikation

**Rechnermodul** 4

Berechnung der relativen Position der Hindernisse

**2. Speicher** 5

"Kalibrierung"

Daten der Sensoren

**3. Speicher** 6

Aufbau und Aktualisierung einer lokalen Umgebungskarte

**4. Speicher** 7

Umgebungsmodul

Segmentierung

Polygonerstellung

Szenen-interpretation

**Bewegungsplaner** 8

**Anzeige** 9

Ausführungsplaner

Erzeugung von Fahr- und Lenk-befehlen bzw. Steueranweisungen

10 Steuerung

Bestimmungsmodul

# FIG. 2

# FIG. 2a

Sensormodul

FIG. 3

Speicherraum

Segmente
freier
Flächen

41

Polygonzug

44

41

Meßwerte

44 Polygonzug

Adressbereich
des aktuellen
Fahrzeugs

41

42 Meßwerte

43

45

FIG. 4